# EUROPÄISCHE PATENTSCHRIFT

(11) **EP 2 171 495 B1**
(45) Veröffentlichungstag und Bekanntmachung des Hinweises auf die Patenterteilung: **20.08.2014**
(21) Anmeldenummer: 08760406.2
(22) Anmeldetag: 03.06.2008
(51) Int. Cl.: G01S 13/30, G01S 15/10, G01S 15/42, G01S 15/87, G01S 15/93, G01S 13/93

(54) **VERFAHREN UND VORRICHTUNG ZUR ERFASSUNG EINER UMGEBUNG**
METHOD AND DEVICE FOR SENSING THE SURROUNDINGS
PROCÉDÉ ET DISPOSITIF DE DÉTECTION D'UN ENVIRONNEMENT

(30) Priorität: 28.06.2007 DE 102007029959
(43) Veröffentlichungstag der Anmeldung: 07.04.2010
(73) Patentinhaber: Robert Bosch GmbH, 70442 Stuttgart (DE)
(72) Erfinder: FRANK, Michael, 75015 Bretten (DE); SCHMID, Dirk, 75397 Simmozheim (DE)
(86) Internationale Anmeldenummer: PCT/EP2008/056822
(87) Internationale Veröffentlichungsnummer: WO 2009/000613

(56) Entgegenhaltungen:
- EP-A- 0 447 874
- EP-A- 1 624 319
- DE-A1- 19 744 185
- DE-A1- 19 963 755
- DE-A1-102005 033 403
- GB-A- 2 352 294

## Beschreibung

Die vorliegende Erfindung liegt auf dem Gebiet der Sensorik, genauer auf dem Gebiet der Erfassung von dreidimensionalen Gegenständen in einem Raum. Dabei können entsprechende Gegenstände nachgewiesen und ihre Position in Bezug auf einen zentralen Standort registriert beziehungsweise entsprechende Abstände bestimmt werden.

Derartige Erfassungssysteme sind vielfältig einsetzbar, insbesondere werden sie in der Automobiltechnik unter Einsatz von Ultraschall zur Bestimmung von Entfernungen im Bereich von wenigen Zentimetern bis zu einigen Metern eingesetzt.

Bekannte Anwendungen sind Abstandswarnsysteme, Parklückendetektoren und Einparkhilfen.

Entsprechende Systeme zur Abstandsmessung und Umgebungserfassung sind aus dem Stand der Technik in verschiedenen Ausprägungen bereits bekannt.

Aus der DE 102005033403 A1 ist allgemein ein Verfahren zur Messung von Entfernungen bekannt, beispielsweise mittels Radar, Lidar oder akustischen Wellen, bei dem eine Echolaufzeit gemessen und ausgewertet wird. Um die Echolaufzeit genau zu bestimmen, wird das reflektierte und erfasste Signal über eine Korrelationsanalyse mit einem dem ausgesandten Signal zugeordneten Referenzsignal unter Verwendung eines "Matched filters" verglichen.

Aus der DE 19744185 A1 ist für ein Kraftfahrzeug eine Ultraschallabstandsmessung bekannt, bei der mehrere Ultraschallwandler eingesetzt werden. Die gleichzeitige Aussendung von Ultraschallimpulsen wird durch Ausnutzung der Überlagerung und Addition von entsprechenden Wellenamplituden verwendet, um höhere Sendestärken und damit größere Reichweiten zu erzielen.

Aus der GB 2352294 A ist ein Ultraschallabstandsmesssystem für Kraftfahrzeuge bekannt, bei dem Wandler nacheinander bei unterschiedlichen Frequenzen betrieben werden, um Interferenzen beziehungsweise Auslöschungen, die bei bestimmten Frequenzen zufällig auftreten können, durch den Betrieb bei anderen Frequenzen korrigieren zu können.

Aus der DE 19963755 A1 ist eine Einrichtung zur Abstandsmessung für ein Kraftfahrzeug bekannt, bei der mehrere Abstandssensoren vorgesehen sind, die in verschiedenen Arbeitsmodi betrieben werden können, um die Qualität der Messung zu verbessern.

Die DE 102004038496 A1 offenbart eine Vorrichtung und ein Verfahren zur Abstandsmessung für ein Kraftfahrzeug, bei der bestimmte Umgebungsbedingungen des Kraftfahrzeuges gemessen werden, die einen Einfluss auf die Signalausbreitung haben, wie beispielsweise beim Einsatz von Ultraschallsignalen die Temperatur und der Wasserdampfgehalt der Luft. Diese Größen werden bei der Auswertung der Echosignale berücksichtigt.

Die EP 0 447 874 offenbart eine Pulsradaranlage, die das Aussenden zweier Pulse mit unterschiedlicher Modulation zur Verkleinerung der Totzone in Richtung zur Radaranlage vorsieht.

Der vorliegenden Erfindung liegt vor dem Hintergrund des Standes der Technik die Aufgabe zugrunde, ein Verfahren und eine Vorrichtung zur Erfassung einer Umgebung zu schaffen, bei dem mittels durch wenigstens zwei Wandler ausgesandter Trägerwellen und Erfassung von Reflexionen der ausgesendeten Trägerwellen im Puls-Echo-Verfahren die Messrate erhöht und die Datenqualität verbessert wird.

Die Aufgabe wird gemäß der Erfindung mit den Merkmalen des Patentanspruchs 1 gelöst.

Der Erfindung liegt dabei der Gedanke zugrunde, verschiedene Pulse, die auf je einer Trägerwelle für eine Pulslänge von einem Wandler ausgesendet werden, dadurch unterscheidbar zu machen, dass eine Modulation der Trägerwelle vorgenommen wird, die es erlaubt, die einzelnen Pulse zu unterscheiden.

Dadurch entstehen Pulse erster Art, Pulse zweiter Art und gegebenenfalls weiterer Arten mit jeweils unterschiedlicher Modulation.

Werden beispielsweise gleichartige Pulse von einem einzigen Wandler nacheinander ausgesendet, so muss im Normalfall nach Aussendung einer Pulslänge von etwa 300 Mikrosekunden der Ablauf eines Messintervalls abgewartet werden, um sicher zu sein, dass bei Vorhandensein eines erfassbaren Körpers entsprechende Reflexionen zu einem Wandler zurückgekehrt sind.

Wird eine Messreichweite von etwa fünf Metern angestrebt, so sind bei einer angenommenen Schallgeschwindigkeit von 343 Metern pro Sekunde 30 Millisekunden Wartezeit notwendig, um sicherzustellen, dass im Falle eines im Erfassungsbereich befindlichen Gegenstandes eventuell reflektierte Signale bei einem Wandler eingetroffen wären. Erst danach sollte ein neuer Puls von einem Wandler ausgesendet werden, wenn dieser nicht mit dem ersten Puls verwechselt werden soll. Die Erfindung schafft hier Abhilfe dadurch, dass bereits während des Messintervalls ein Puls zweiter Art von einem anderen Wandler ausgesendet wird, wobei der Puls zweiter Art durch die Modulation von dem Puls erster Art unterscheidbar ist.

Die von den Wandlern empfangenen Reflexionssignale können aufgrund der Modulation auseinandergehalten und den jeweiligen Sendezeitpunkten zugeordnet werden. Auf diese Weise können Pulse insgesamt wesentlich häufiger ausgesendet werden als gemäß dem Stand der Technik, wodurch die Messrate erhöht wird. Beispielsweise können während des Ablaufs des Messintervalls, gemessen von der Aussendung eines Pulses erster Art, zusätzlich ein Puls zweiter Art und ein Puls dritter Art ausgesendet werden.

Es ist gemäß der Erfindung auch möglich, verschiedene Wandler anhand der Modulation der von ihnen ausgesandten Pulse zu unterscheiden.

Werden verschiedene, gleichartige Wandler derart betrieben, dass ihre Signale beziehungsweise die Reflexionen von Pulsen einander stören können, so muss auch hierbei grundsätzlich nach Aussenden eines ersten Pulses gewartet werden, bis dessen Reflexionen gegebenenfalls eingetroffen sind oder wären. Während dieser Zeit können benachbarte Wandler nur bedingt betrieben werden. Sind die Pulse, die von verschiedenen Wandlern stammen, mittels unterschiedlicher Modulationen unterscheidbar, so können verschiedene Wandler auch gleichzeitig oder mit kurzem zeitlichem Unterschied entsprechende Pulse aussenden.

Dabei können die Reflexionen jeweils von dem Wandler nachgewiesen werden, der den entsprechenden Puls ausgesendet hat oder auch von anderen, beispielsweise direkt benachbarten, Wandlern. Je nach der eingesetzten Technologie sind dieselben Wandler zum Aussenden und Empfangen von Pulsen verwendbar, wie dies beispielsweise bei Ultraschallwandlern bekannt ist.

Reflexionen von ausgesandten Pulsen können auch optional durch mehrere der Wandler parallel nachgewiesen werden, um eine höhere Detektionssicherheit zu erreichen oder außer der Entfernungsmessung zusätzliche Informationen zum Zweck einer genaueren Positionierung eines erfassten Gegenstandes zu erhalten.

Durch die Unterscheidbarkeit verschiedener Pulse wird beispielsweise auch sichergestellt, dass ein Echopuls, der aufgrund eines außerhalb der geplanten Erfassungsreichweite liegenden Gegenstandes verspätet eintrifft, nicht irrtümlich einem später ausgesandten Puls zugeordnet wird. Bei periodischem Betrieb eines entsprechenden Erfassungsverfahrens gemäß dem Stand der Technik würde dabei eine systematische Fehlerfassung im Sinne eines Aliasing entstehen. Dies wird mit den Mitteln der Erfindung verhindert.

Grundsätzlich kann gemäß der Erfindung zur Unterscheidung von Pulsen eine individuelle analoge oder digitale Amplitudenmodulation oder eine analoge oder digitale Winkelmodulation erfolgen.

Dabei kann mittels der bekannten analogen Amplitudenmodulation ein geeignetes Signal auf die Trägerwelle aufmoduliert werden. Der Informationsgehalt und damit die Unterscheidbarkeit verschiedener Pulse hängt im wesentlichen von der Bandbreite des Trägersignals und der Länge des ausgesandten Pulses ab. Höherfrequente Trägerwellen erlauben damit eine bessere Unterscheidbarkeit beziehungsweise mehr verschiedene unterscheidbare Pulse als niederfrequentere Trägerwellen.

Zudem kann eine digitale Amplitudenmodulation dadurch erfolgen, dass die Amplitude in diskreten Schritten moduliert wird oder dass bestimmte periodische oder nichtperiodische Codierungen auf die Trägerwelle aufgebracht werden.

Winkelmodulationen umfassen beispielsweise die bekannte Frequenzmodulation, die aus dem Radiobereich vertraut ist sowie Phasenmodulationen.

Digitale Winkelmodulationen können auch mit Amplitudenmodulationen kombiniert sein und generell eine Vielzahl von bekannten Codierungen umfassen.

Hervorzuheben sind dabei besonders wenig fehleranfällige Kodierungen, die aus der Kommunikationstechnik bekannt sind, wie beispielsweise die sogenannten Hamming Codes, die auch bei leicht fehlerhafter Übermittlung eine Korrektur der Signale erlauben und damit eine große Übermittlungssicherheit bieten.

Unter den Codes, die speziell die Phasenlage eines Signals berücksichtigen, sind die sogenannten Manchester Codes hervorzuheben, die beispielsweise auch eine Taktrückgewinnung eines Signals erlauben.

Grundsätzlich sind auch Kombinationen aus analogen und digitalen Modulationen denkbar sowie auch die Kombination mit verschiedenen Trägerwellen, die die einzelnen Pulse zusätzlich unterscheidbar machen. Besonders zu erwähnen sind noch die Pulsmodulationen, bei denen ein kontinuierliches analoges Signal in eine zeitdiskrete Signalfolge umgewandelt wird, wobei eine Pulsweitenmodulation, eine Pulsamplitudenmodulation oder eine Pulsfrequenzmodulation sowie eine Pulsphasenmodulation vorgesehen sein kann.

Damit steht eine Vielzahl von Modulationsverfahren zur Verfügung, mittels deren eine hohe Anzahl von Pulsen unterscheidbar gemacht werden kann. Voraussetzung für die Unterscheidbarkeit ist, dass die entsprechenden Wandler beim Empfang die reflektierten Signale unterscheiden können. Hierzu sind verschiedene digitale und/oder analoge Filtertechniken sowie Korrelationstechniken bekannt, die bei der Realisierung der Erfindung Anwendung finden können.

Gemäß einer speziellen Ausgestaltung der Erfindung können als Trägerwellen für das Verfahren Ultraschallwellen verwendet werden. Entsprechende Wandler sind verfügbar und werden in der Automobiltechnik bereits umfangreich eingesetzt. Grundsätzlich ist jedoch auch im Rahmen der Erfindung der Einsatz beispielsweise von Mikrowellenwandlern alternativ oder zusätzlich denkbar.

Beim Einsatz der Erfindung bei einem Fahrzeug, entweder im Rahmen eines Abstandswarnsystems, eines Parklückendetektionssystems oder einer Einparkhilfe, sind oft mehrere Wandler am Kraftfahrzeug verteilt vorgesehen. Es können beispielsweise wenigstens drei, insbesondere auch mehr als vier, Wandler parallel verwendet werden, die beispielsweise entlang einer vorderen und/oder hinteren Stoßstange des Kraftfahrzeugs verteilt werden können. Die Sende- und Empfangsrichtungen der einzelnen Wandler können sich unterscheiden, so dass den einzelnen Wandlern überschneidende oder auch nicht überschneidende Raumwinkel zugeordnet sind.

Die Erfindung bezieht sich zudem auf eine Vorrichtung gemäß der Erfindung zur Erfassung einer Umgebung mit wenigstens zwei Ultraschallwandlern zwei zur Aussendung von Pulsen, einer Zentraleinheit, in der verschiedene Modulationen verschiedenen Sendezeitpunkten und/oder Wandlern zugeordnet sind, einem Ultraschallwandler zur Erfassung von Reflexionen und einer Auswerteeinheit zur Auswertung von Reflexionszeiten unter Berücksichtigung verschiedener Modulationen und der diesen zugeordneten Wandler und/oder Sendezeitpunkte.

Eine derartige Einrichtung erlaubt nicht nur das Aussenden verschiedenartiger Pulse sondern auch die Unterscheidung und Zuordnung zu bestimmten Sendezeitpunkten und damit die Verwaltung der gleichzeitig oder mit geringem Zeitversatz ausgesendeten Pulse und ihrer Reflexionen. Dabei kann die Zentraleinheit einem oder mehreren Wandlern bestimmte Modulationen zur Unterscheidung vorgeben oder es kann grundsätzlich jedem Wandler ein bestimmtes Muster oder eine bestimmte Modulation bereits von vornherein vorgegeben sein, wobei dann der jeweilige Wandler bei Aussenden eines Signals eine Information über die Aussendung und die verwendete Modulation an die Zentraleinheit gibt.

In einer Auswerteeinheit werden dann die individuellen Laufzeiten einzelner Pulse berechnet und daraus Entfernungswerte abgeleitet. Diese können miteinander verglichen oder kombiniert werden, um ein virtuelles Abbild der Umgebung beispielsweise eines Kraftfahrzeuges zu erzeugen oder im einfachsten Fall bei einem zu geringen Abstand zu einem Hindernis eine Warnung auszusenden.

Bei der Verwendung im Rahmen eines Parklückensensors ist außer der Entfernungserfassung, die sich vorwiegend auf die Tiefe der Parklücke bezieht, auch noch die Erfassung der Länge der Parklücke, beispielsweise durch Kombination der Messwerte von unterschiedlichen Wandlern notwendig oder durch eine Messung der von dem Kraftfahrzeug zurückgelegten Wegstrecke während der Parklückenvermessung.

Im folgenden wird die Erfindung anhand eines Ausführungsbeispiels in einer Zeichnung gezeigt und anschließend beschrieben.

Dabei zeigt:
- Fig. 1: eine schematische Ansicht mehrerer Wandler an einem Kraftfahrzeug von oben;
- Fig. 2: eine Trägerwelle schematisch;
- Fig. 3: eine amplitudenmodulierte Trägerwelle;
- Fig. 4: eine frequenzmodulierte Trägerwelle;
- Fig. 5: eine digital amplitudenmodulierte Trägerwelle;
- Fig. 6: eine digital amplitudenmodulierte Trägerwelle mit geringerem Modulationsgrad als in Figur 5;
- Fig. 7: mehrere Codes in einer Manchester - Codierung;
- Fig. 8: die Codes aus Figur 7 in einer Manchester -codierung mit geringerem Modulationsgrad;
- Fig. 9: die Verteilung von Pulsen mit unterschiedlicher Modulation in überschneidenden Messintervallen;
- Fig. 10: ein Betriebsschema für eine Gruppe von Wandlern gemäß dem Stand der Technik;
- Fig. 11: ein Schema zum Betrieb von Wandlern gemäß der Erfindung;
- Fig. 12: schematisch eine Verkehrssituation mit Fahrzeugen von oben dargestellt bei der Parklückendetektion;
- Fig. 13 a, b: schematisch den Aufbau einer erfindungsgemäßen Vorrichtung.

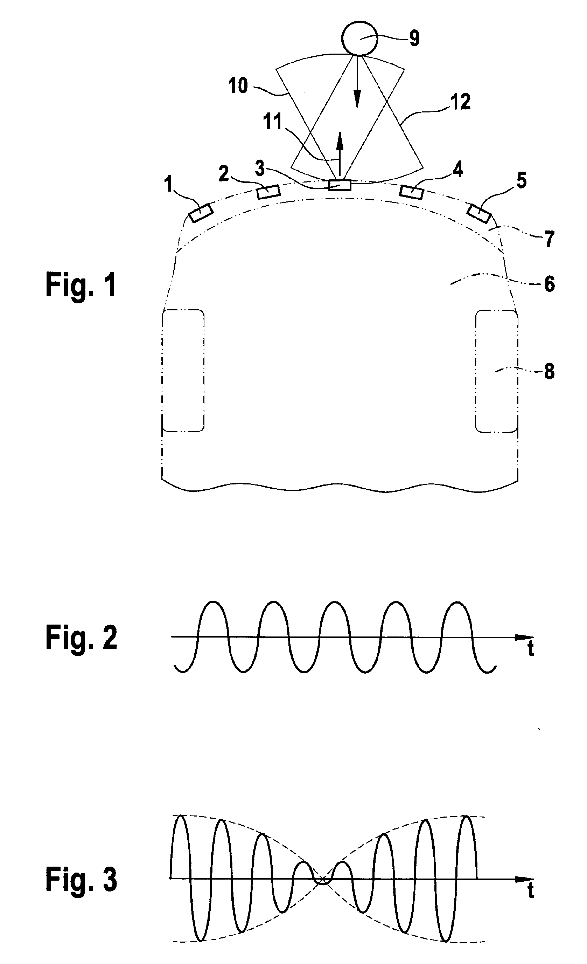

Figur 1 zeigt schematisch von oben einen Teil eines Kraftfahrzeuges 6 mit einer Stoßstange 7, an der Ultraschallwandler 1, 2, 3, 4, 5 angeordnet sind. Schematisch sind an dem Kraftfahrzeug 6 Reifen 8 dargestellt.

Zusätzlich ist ein mittels der Ultraschallwandler zu erfassender Gegenstand 9 vor dem Kraftfahrzeug angeordnet. Es kann sich dabei beispielsweise um ein Verkehrshindernis, einen Kübel, ein Straßenschild oder eine Laterne sowie auch um ein weiteres Fahrzeug handeln.

Im Zusammenhang mit dem Wandler 3 ist ein Sendekegel 10 sowie ein Richtungspfeil 11 dargestellt, der die Senderichtung andeutet. Es ist zu erkennen, dass der Sendekegel 10 den zu erfassenden Gegenstand 9 trifft so dass der Puls teilweise von diesem in Richtung auf den Wandler 3 hin in einem zweiten Sendekegel 12 reflektiert wird.

Der Wandler 3 registriert die Reflexion und die Vorrichtung insgesamt die zwischen Aussenden des Sendepulses und dem Empfangen der Reflexion verstrichene Zeit t.

Aus der verstrichenen Zeit lässt sich bei bekannter Signalgeschwindigkeit, beispielsweise der Schallgeschwindigkeit von 343 m pro Sekunde der Abstand des Gegenstandes 9 von dem Wandler 3 berechnen.

Bei abweichenden Umweltbedingungen, die die Signalgeschwindigkeit, beispielsweise die Schallgeschwindigkeit, beeinflussen können, können diese mittels weiterer nicht dargestellter Sensoren erfasst und bei der Berechnung mit berücksichtigt werden. Es ist hierzu beispielsweise die Messung der Lufttemperatur denkbar.

In der Figur 1 ist zudem zu erkennen, dass der reflektierte Sendekegel 12 nicht nur den Wandler 3 sondern auch benachbarte Wandler 2 und 4 treffen kann, die ebenfalls die Reflexion registrieren. Diese Wandler 2, 4 senden ebenso wie die übrigen Wandler 1, 5 zudem eigene Ultraschallsignale in Form von Pulsen aus, deren Reflexion sie überwachen. Es ergibt sich das Problem, dass die entsprechenden Pulse nicht nur von dem sendenden Wandler beziehungsweise dem für den Nachweis der Reflexion vorgesehenen Wandler registriert werden, sondern auch von benachbarten Wandlern.

Sind die Signale nicht unterscheidbar, so ergeben sich Vieldeutigkeiten und damit falsch zugeordnete beziehungsweise berechnete Entfernungen von Gegenständen.

Dieses Problem kann sich bereits auch bei Betrieb nur eines einzigen Wandlers 3 ergeben, sobald von diesem in zu kurzem zeitlichen Abstand aufeinanderfolgende Sendepulse ausgesendet werden. Im Idealfall sollte nach Aussendung eines beispielsweise 300 Mikrosekunden langen Pulses das Verstreichen des gesamten Messintervalls abgewartet werden, in dem entsprechende Reflexionen von Gegenständen 9 zu erwarten sind, die innerhalb des Erfassungsbereichs der Erfassungsvorrichtung liegen. Ein solcher Erfassungsbereich kann beispielsweise bei der Parklückendetektion eine Entfernung von etwa fünf Metern umfassen, so dass das Messintervall mindestens 30 Millisekunden beträgt.

Sollen innerhalb dieses Messintervalls weitere Pulse ausgesendet werden, so müssen die Pulse untereinander unterscheidbar sein.

Dies genau leistet die Erfindung durch eine entsprechende Modulation der Trägerwellen der ausgesendeten Pulse.

Figur 2 zeigt schematisch eine Trägerwelle, wie sie beispielsweise durch einen Ultraschallwandler erzeugt werden kann, näherungsweise in einer Sinusform. Auf der Abszisse ist dabei die Zeit t aufgetragen. Außer einer Sinusform kommen jedoch auch andere periodische Schwingungen in Frage.

In der Figur 3 ist ein ähnliches Signal dargestellt wie das aus der Figur 2, mit einer Amplitudenmodulation, wie sie auch aus dem Radiobereich bekannt ist.

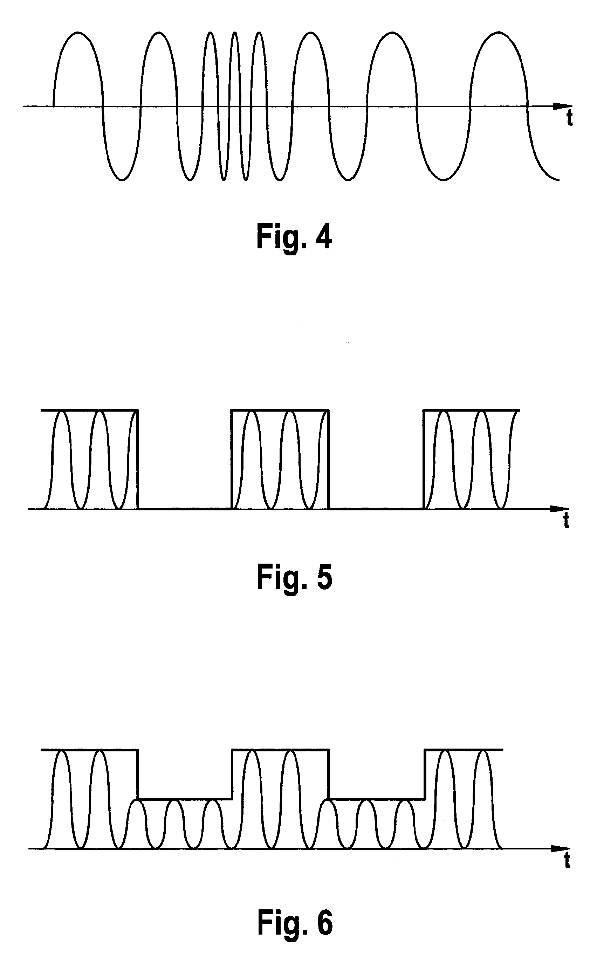

Die Figur 4 zeigt ein frequenzmoduliertes Schwingungssignal, das ebenfalls grundsätzlich aus dem Stand der Technik bekannt ist.

In der Figur 5 ist ein digital amplitudenmoduliertes Signal dargestellt, bei dem die Trägerwelle in einer Stufenfunktion moduliert ist, wobei zwischen einzelnen gesendeten Pulsen die Signalstärke 0 herrscht.

Im Gegensatz dazu zeigt die Figur 6 ein Signal mit geringerem Modulationsgrad, wobei ebenfalls eine Stufenfunktion aufmoduliert ist und das Signal der Trägerwelle zwischen einer vollen und einer halben Amplitude wechselweise geschaltet wird.

Entsprechende digitale Modulationen können zur Übermittlung von digitalen Codes dienen, wie sie beispielsweise aus der Leitungscodierung bekannt sind. Bei entsprechender digitaler Codierung können auch fehlerverträgliche Codes beziehungsweise selbstkorrigierende oder korrigierbare Codes wie Hamming Codes eingesetzt werden.

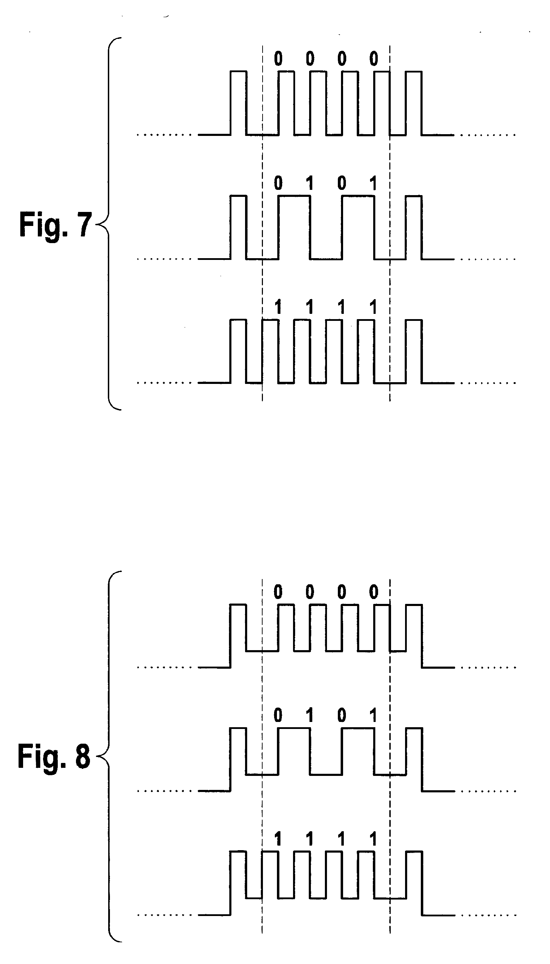

Die Figur 7 zeigt als Beispiel eines phasenmodulierenden Codes die Darstellung eines vier Bit langen Codewortes anhand einer Manchestercodierung. Diese sieht zu Beginn eines Pulses ein Startbit vor, in Bezug auf das nachfolgende Bits durch die zeitliche Abfolge nachfolgender Spannungsflanken dargestellt werden. In der Darstellung ist in horizontaler Richtung jeweils der Zeitverlauf dargestellt, wobei ein Startbit den Anfang markiert und die gestrichelten senkrechten Linien jeweils den Beginn des ersten Bits beziehungsweise das Ende des letzten der vier Bits markieren. Eine steigende Flanke zu Beginn eines Bittaktes markiert eine 1, keine Flanke oder eine abfallende Flanke eine 0.

Somit ist in der oberen der drei Teildarstellungen die Bitfolge 0000, in der mittleren die Bitfolge 0101 und in der unteren Teildarstellung die Bitfolge 1111 dargestellt.

In der Figur 8 sind dieselben Bitfolgen ebenfalls mittels einer Manchestercodierung dargestellt, jedoch mit einem geringerem Modulationsgrad.

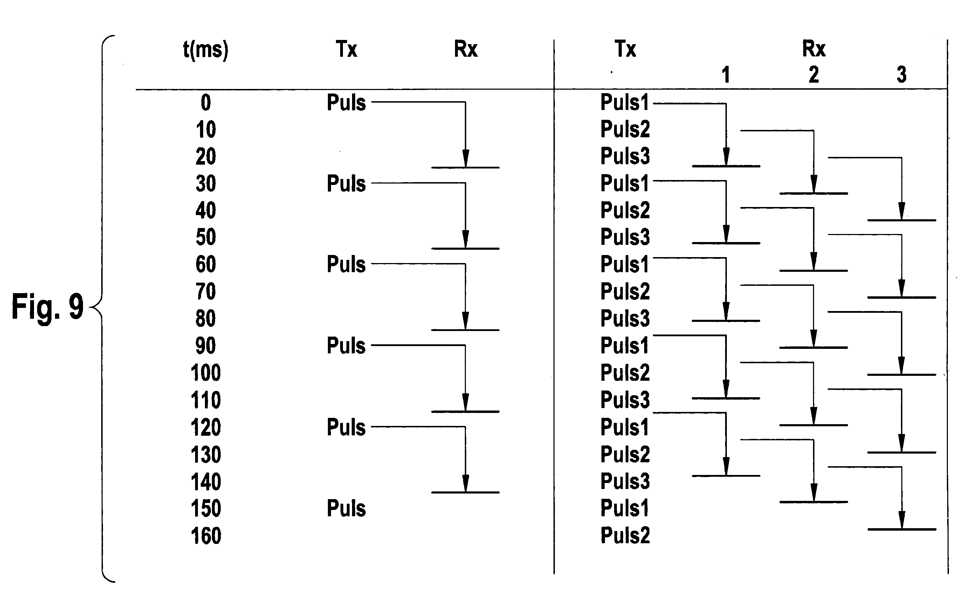

Die Figur 9 zeigt in vertikaler Folge von oben beginnend einen Messvorgang zur Erfassung von Gegenständen beziehungsweise zur Vermessung eines Abstandes mittels entsprechender Wandler, wobei in der linken Hälfte eine Lösung gemäß dem Stand der Technik, in der rechten Hälfte das Vorgehen gemäß der vorliegenden Erfindung näher dargestellt ist.

Dabei ist vorausgesetzt, dass die Messintervalle etwa 30 Millisekunden betragen, so dass gemäß der linken Halbdarstellung bei t = 0 Millisekunden ein Puls ausgesendet wird (tx = Transmission x) und die Reflexion zwischen 0 und 30 Millisekunden abgewartet und mittels eines Wandlers überwacht wird. In dieser Zeit wird, damit es nicht zu Verwechselungen kommt, kein weiterer Sendepuls ausgesendet. Erst nach Ablauf der 30 Millisekunden, wenn keine Reflexionen von einem Gegenstand innerhalb des Erfassungsbereichs von etwa 5 Metern zu erwarten sind, wird der nächste Puls ausgesendet und so weiter, so dass innerhalb von etwa 150 Millisekunden fünf Pulse ausgesendet werden und ihre Reflexion abgewartet werden kann.

In der rechten Hälfte der Darstellung ist gezeigt, dass in demselben Zeitablauf, beispielsweise während der ersten 30 Millisekunden drei Pulse, die Pulse 1, 2, 3 ausgesendet werden können und zwar jeweils mit einem Zeitversatz von etwa 10 Millisekunden. Die entsprechenden Reflexionen werden individuell abgewartet, das heißt jeweils 30 Millisekunden nach dem Aussenden des jeweiligen Pulses. Dabei können die Messintervalle sich überschneiden, da die einzelnen Sendepulse durch Modulation unterscheidbar sind.

Es ist in der Figur dargestellt, dass drei Wandler R1, R2, R3 bereitstehen, um die Reflexionen nachzuweisen. Der Nachweis kann jedoch auch über einen gemeinsamen Wandler oder über mehr als drei Wandler erfolgen. Es ergibt sich, dass insgesamt in der selben Zeit von 150 Millisekunden dreimal so viele Pulse ausgesendet und nachgewiesen werden können wie gemäß dem Stand der Technik. Dadurch sind erheblich mehr Messpunkte gewinnbar zur Abtastung der Umgebung der Messeinrichtung beziehungsweise eines Kraftfahrzeuges, wodurch die Qualität der Messung stark verbessert werden kann. Durch die bessere Unterscheidbarkeit der Pulse werden auch Fehlzuordnungen wie beispielsweise ein verspäteter Nachweis von reflektierten Echopulsen eines früheren Pulses verbessert und damit auch die Qualität einzelner Pulsechomessungen verbessert.

Es ergibt sich dadurch mit geringem Aufwand eine wesentliche Verbesserung der Funktion bei dem erfindungsgemäßen Erfassungsverfahren.

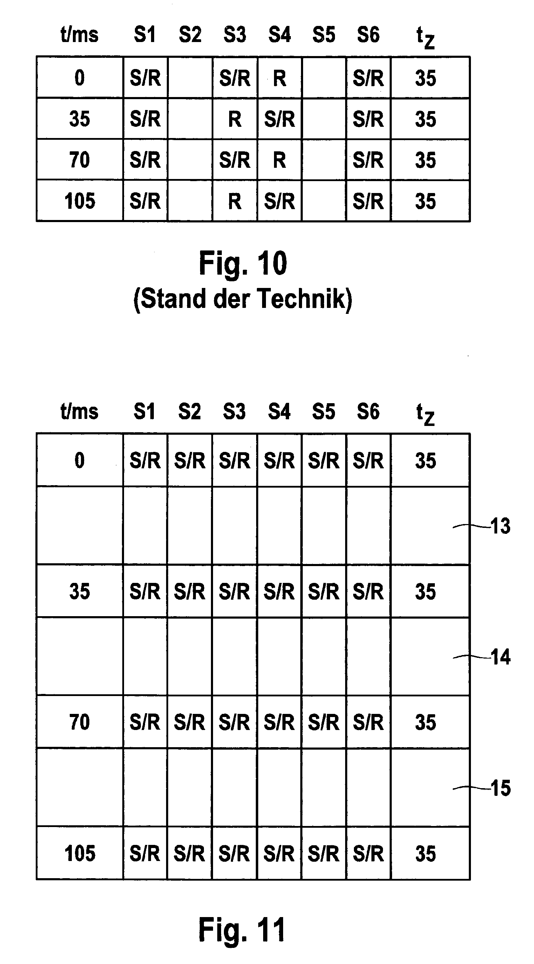

Die Figur 10 zeigt den gemeinsamen und gleichzeitigen Betrieb von mehreren Wandlern, wobei in dem Beispiel sechs Wandler S1 bis S6 in einer Tabelle aufgeführt sind. Der zeitliche Ablauf erfolgt beginnend mit der ersten Zeile der Tabelle und endend mit der letzten Zeile. In der linken Spalte ist die fortlaufende Messzeit in Millisekunden dargestellt. In der am weitesten rechts stehenden Spalte sind die Zykluszeiten oder Messintervalle dargestellt, die jeder einzelnen Messung zugeordnet sind, im vorliegenden Beispiel jeweils 35 Millisekunden.

Grundsätzlich ist gemäß dem Stand der Technik, wie in der Figur 10 dargestellt, ein gleichzeitiger Sendebetrieb bei zwei direkt nebeneinander liegenden Wandlern wie beispielsweise S1 und S2 oder S3 und S4 oder S2 und S3 nur mit Nachteilen möglich. Insofern repräsentieren die nebeneinander liegenden Spalten der Tabelle auch örtlich in einer Messeinrichtung direkt benachbarte Wandler.

Beispielsweise während des ersten Zyklus wird S1 als Sender betrieben, S2 bleibt funktionslos, S3 wird als Sender betrieben und S4 kann deshalb als direkter Nachbar von S3 nicht als Sender betrieben werden, jedoch als Empfänger. S5 kann ebenfalls als direkter Nachbar von S6 nicht als Sender betrieben werden.

Die jeweiligen als Sender betriebenen Wandler können im Verlauf des Messintervalls zusätzlich als Empfänger verwendet werden.

Im darauffolgenden Messintervall wechseln S3 und S4 ihre Funktion, so dass diesmal S4 als Sender und Empfänger funktioniert, S3 dagegen nur als Empfänger.

Durch diese Verteilung der Sendegruppen ist sichergestellt, dass nie zwei direkt einander benachbarte Wandler gleichzeitig im Sendebetrieb arbeiten, weil dies zu einer Störung der Messung führen würde, so lange die ausgesendeten Pulse, insbesondere Ultraschallpulse, nicht unterscheidbar sind.

In der Figur 11 ist im Gegensatz zu Figur 10 ein Sendegruppenschema gemäß der Erfindung dargestellt, wobei die Tabellendarstellung in der Struktur ähnlich ist wie gemäß der Figur 10.

Es können jedoch im Gegensatz zum Stand der Technik auch benachbarte Wandler S1, S2, S3, S4, S5, S6 gleichzeitig im Sendebetrieb bei unterschiedlichen Modulationen betrieben werden. So geschieht dies in jedem der vier Messintervalle. Zwischen den Zeilen, die jeweils dem Beginn der Messintervalle zugeordnet sind, sind Leerzeilen 13, 14, 15 vorgesehen, durch die angedeutet werden soll, dass innerhalb des selben Messintervalls zwischen 0 und 35 Millisekunden, zwischen 35 und 70 Millisekunden und zwischen 70 und 105 Millisekunden zusätzliche Pulse durch die Wandler S1 bis S6 ausgesendet werden können, soweit sie sich von den jeweils durch einen Wandler bereits ausgesendeten Pulsen durch Modulation unterscheiden.

Damit zeigt sich in der Übersicht, dass sowohl mehrere Wandler gleichzeitig auch benachbart zueinander gemäß der Erfindung einfach zu betreiben sind, als auch die Frequenz, in der Pulse ausgesendet werden können gegenüber dem Stand der Technik deutlich erhöht ist.

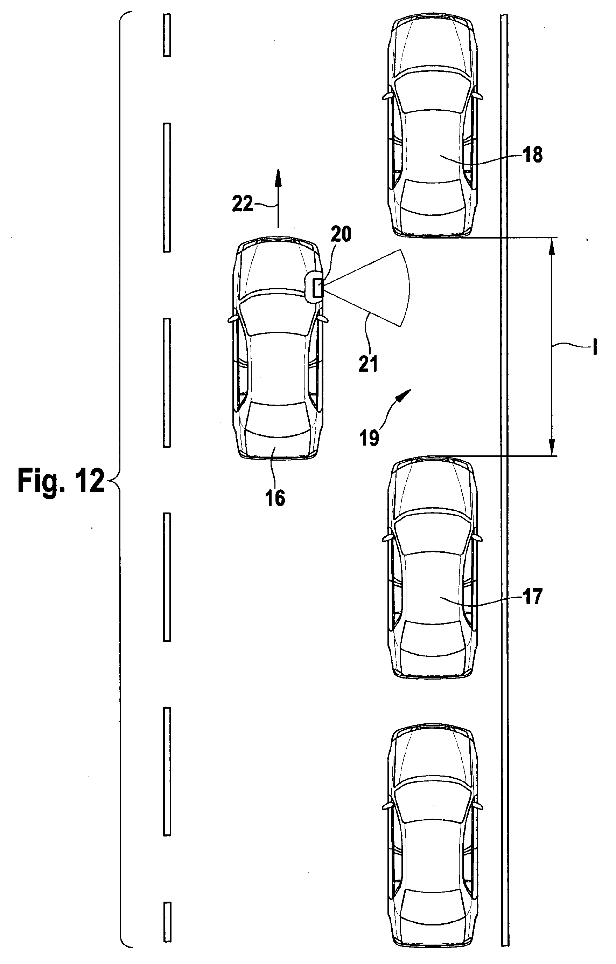

In der Figur 12 ist schematisch ein Parklückensuchvorgang mit mehreren Fahrzeugen von oben dargestellt. Das Fahrzeug 16 ist auf dem Weg, um eine Parklücke zu suchen während die parkenden Fahrzeuge 17, 18 Parkplätze einnehmen beziehungsweise einen Parkplatz 19 zwischen sich frei lassen. Das Fahrzeug weist wenigstens einen Sensor/Wandler 20 auf, der zur Seite senkrecht zur Fahrtrichtung Ultraschallimpulse aussendet, wie durch den Sendekegel 21 angedeutet. Der Erfassungsbereich des Wandlers ist auf maximal etwa fünf Meter eingestellt, so dass das Fehlen von Reflexionen nach dem Aussenden von Ultraschallpulsen darauf hindeutet, dass innerhalb von fünf Metern seitlich neben dem Fahrzeug kein Hindernis vorhanden ist. Bewegt sich das Fahrzeug in Richtung des Pfeils 22, so kann mittels Rollwinkelsensoren an den Rädern die zurückgelegte Entfernung gemessen werden, bis der Wandler 20 das parkende Fahrzeug 18 neben dem Fahrzeug 16 nachweist und damit das Ende der Parklücke markiert. Durch Berechnung der zurückgelegten Entfernung kann damit die Länge der Parklücke zusätzlich zu der erfassten Tiefe registriert und ausgewertet werden. Die Länge der Parklücke ist in der Figur 12 mit I bezeichnet.

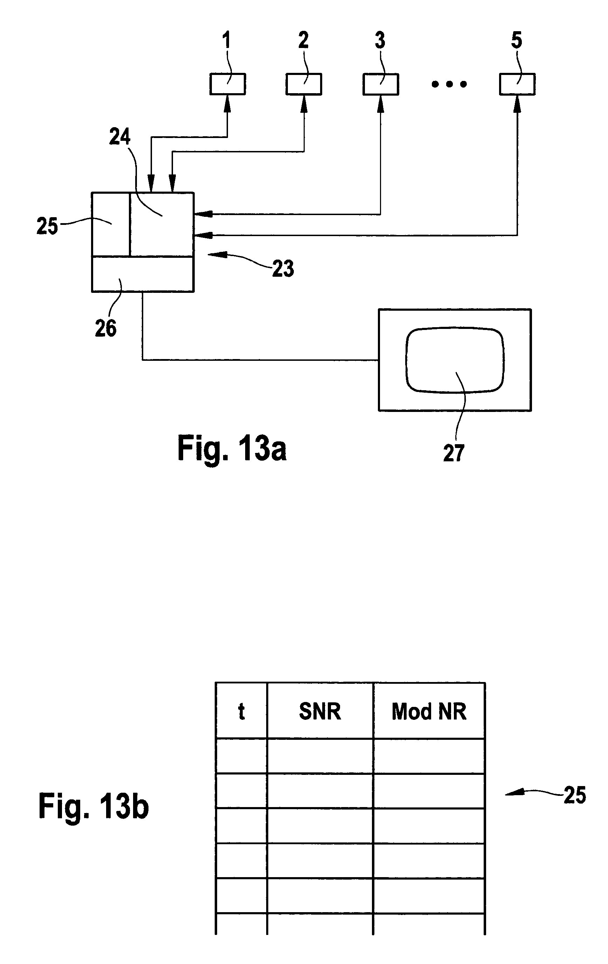

Die Figur 13a, b zeigt schematisch eine Vorrichtung zur Durchführung des erfindungsgemäßen Verfahrens zur Erfassung einer Umgebung mit Ultraschallwandlern 1, 2, 3, 5, die mit einer Zentraleinheit 23 kommunizieren. Die Zentraleinheit 23 kann beispielsweise auch an einem der Wandler in Form eines Mikrocontrollers angeordnet sein. Es kann die Funktion der Zentraleinheit jedoch auch in einem ohnehin in dem Fahrzeug vorhandenen Prozessor mit integriert sein.

Die Zentraleinheit kann die einzelnen Wandler 1, 2, 3, 5 ansteuern, damit diese Ultraschallpulse mit unterschiedlicher Modulation aussenden. Dabei können die Modulationen bereits in den Wandlern selbst festgelegt sein oder auch durch die Zentraleinheit 23 bestimmt werden. Die Zentraleinheit 23 weist hierzu eine Ein-/Ausgabeeinheit 24 auf, die auch entsprechende Analyseeinrichtungen aufweist, um reflektierte und durch die Wandler 1, 2, 3, 5 nachgewiesene Echopulse einer bestimmten Modulation zuordnen zu können.

In einer Speichereinheit 25, die in Figur 13b noch einmal vergrößert dargestellt ist, sind den entsprechenden Absendezeiten t für die einzelnen Pulse die jeweiligen sendenden Wandler SNR und die jeweiligen Modulationsarten Mod NR zugeordnet. Bei einer späteren Auswertung durch eine Auswerteeinheit 26 werden die einkommenden Echopulsdaten mit den in der Speichereinheit 25 gespeicherten Daten verglichen, so dass jedem modulierten ausgesendeten Impuls gegebenenfalls die Reflexion sowie der Zeitpunkt des Eintreffens des reflektierten Pulses zugeordnet werden kann. In der Auswerteeinheit werden daraus Laufzeiten und daraus wiederum Entfernungen bestimmt. Diese Werte werden an eine Abbildungseinheit 27 gesendet, die aus den verschiedenen erfassten Entfernungswerten ein virtuelles Bild der Umgebung beispielsweise eines Kraftfahrzeuges generiert.

Grundsätzlich können durch die Modulation/Codierung der Pulse Messfehler korrigiert werden und die einzelnen Messungen werden hierdurch zuverlässiger. Zur weiteren Verminderung der Messfehler können die Messzyklen unterschiedlicher Wandler systematisch oder zufällig gegeneinander etwas verschoben werden, um ein Übersprechen der Signale zu verringern beziehungsweise Fehlzuordnungen von Reflexionen fremder Signale unwahrscheinlicher zu machen.

## Patentansprüche

1. Verfahren zur Erfassung einer Umgebung mittels durch wenigstens zwei Wandler (1,2,3,4,5,20) ausgesandter Trägerwellen und Erfassung von Reflexionen der ausgesandten Trägerwellen im Puls-Echo-Verfahren, wobei die Wandler mit einer zentraleinheit (23) kommunizieren und wobei ein Puls erster Art mittels einer Trägerwelle für eine Pulslänge von einem ersten Wandler (1,2,3,4,5,20) ausgesendet wird,
**dadurch gekennzeichnet,**
**dass** darauf von einem anderen Wandler ein Puls zweiter Art ausgesendet wird, dass der Puls erster Art sich von dem Puls zweiter Art durch eine Modulation ihrer jeweiligen Trägerwellen unterscheidet und dass die Reflexion des Pulses erster Art von der Reflexion des Pulses zweiter Art durch die Zentraleinheit (23) anhand der unterschiedlichen Modulationen unterscheidbar ist.

2. Verfahren nach Anspruch 1,
**dadurch gekennzeichnet,**
**dass** die Reflexionen eines Pulses jeweils von demselben Wandler erfasst werden, der den Puls ausgesendet hat.

3. Verfahren nach Anspruch 2,
**dadurch gekennzeichnet,**
**dass** die Reflexionen zusätzlich von wenigstens einem benachbarten Wandler erfasst werden.

4. Verfahren nach einem der Ansprüche 1 bis 3,
**dadurch gekennzeichnet,**
**dass** die Modulation eine analoge oder digitale Amplituden-Modulation ist.

5. Verfahren nach einem der Ansprüche 1 bis 4,
**dadurch gekennzeichnet,**
**dass** die Modulation eine analoge oder digitale Winkel-Modulation ist.

6. Verfahren nach einem der Ansprüche 4 oder 5,
**dadurch gekennzeichnet,**
**dass** die digitale Modulation in Form einer Codierung erfolgt.

7. Verfahren nach Anspruch 6,
**dadurch gekennzeichnet,**
**dass** die digitale Modulation die Hamming Codierung verwendet.

8. Verfahren nach Anspruch 5,
**dadurch gekennzeichnet,**
**dass** die Modulation die Manchester Codierung verwendet.

9. Verfahren nach einem der Ansprüche 1 bis 8,
**dadurch gekennzeichnet,**
**dass** verschiedene Pulse zusätzlich durch Verwendung unterschiedlicher Trägerwellen unterscheidbar sind.

10. Verfahren nach einem der Ansprüche 1 bis 9,
**dadurch gekennzeichnet,**
**dass** als Trägerwellen Ultraschallwellen verwendet werden.

11. Verfahren nach einem der Ansprüche 1 bis 10,
**dadurch gekennzeichnet,**
**dass** wenigstens drei insbesondere mehr als vier Ultraschallwandler parallel verwendet werden.

12. Vorrichtung zur Erfassung einer Umgebung mit wenigstens zwei Ultraschallwandlern (1,2,3,4,5,20) zur Aussendung von Pulsen, einer Zentraleinheit (23), in der verschiedene Modulationen verschiedenen Sendezeitpunkten und/oder Wandlern zugeordnet sind, einem Ultraschallwandler zur Erfassung von Reflexionen und einer Auswerteeinheit (26) zur Auswertung von Reflexionszeiten unter Berücksichtigung verschiedener Modulationen und der diesen zugeordneten Wandler und/oder Sendezeitpunkte, **dadurch gekennzeichnet, dass** Mittel zur Durchführung eines Verfahrens nach einem der vorhergehenden Ansprüche vorgesehen sind.

## Claims

1. Method for sensing the surroundings by means of carrier waves emitted by at least two transducers (1, 2, 3, 4, 5, 20) and sensing reflections of the carrier waves emitted in the pulse-echo method, the transducers communicating with a central unit (23) and a pulse of first type being emitted by a first transducer (1, 2, 3, 4, 5, 20) for one pulse length by means of a carrier wave,
**characterized in that**
thereupon, a pulse of second type is emitted by another transducer, **in that** the pulse of first type differs from the pulse of second type as a result of modulation of their respective carrier waves, and **in that** the reflection of the pulse of first type can be distinguished from the reflection of the pulse of second type by means of the central unit (23) by using the different modulations.

2. Method according to Claim 1,
**characterized in that**
the reflections of a pulse are respectively detected by the same transducer which has emitted the pulse.

3. Method according to Claim 2,
**characterized in that**
the reflections are additionally detected by at least one adjacent transducer.

4. Method according to one of Claims 1 to 3,
**characterized in that**
the modulation is an analogue or digital amplitude modulation.

5. Method according to one of Claims 1 to 4,
**characterized in that**
the modulation is an analogue or digital angle modulation.

6. Method according to either of Claims 4 and 5,
**characterized in that**
the digital modulation is carried out in the form of a code.

7. Method according to Claim 6,
**characterized in that**
the digital modulation uses the Hamming code.

8. Method according to Claim 5,
**characterized in that**
the modulation uses the Manchester code.

9. Method according to one of Claims 1 to 8,
**characterized in that**
various pulses can additionally be distinguished by using different carrier waves.

10. Method according to one of Claims 1 to 9,
**characterized in that**
the carrier waves used are ultrasound waves.

11. Method according to one of Claims 1 to 10,
**characterized in that**
at least three, in particular more than four, ultrasonic transducers are used in parallel.

12. Device for sensing the surroundings, having at least two ultrasonic transducers (1, 2, 3, 4, 5, 20) for emitting pulses, a central unit (23), in which various modulations are assigned to various transmission times and/or transducers, an ultrasonic transducer for sensing reflections, and an evaluation unit (26) for evaluating reflection times while taking into account the various modulations and the transducers and/or transmission times associated with the latter,
**characterized in that**
means for carrying out a method according to one of the preceding claims are provided.

## Revendications

1. Procédé pour détecter un environnement au moyen d'ondes porteuses émises par au moins deux convertisseurs (1, 2, 3, 4, 5, 20) et pour détecter des réflexions des ondes porteuses émises dans un procédé à écho d'impulsion, les convertisseurs communiquant avec une unité centrale (23) et une impulsion d'un premier type étant émise au moyen d'une onde porteuse pendant une longueur d'impulsion par un premier convertisseur (1, 2, 3, 4, 5, 20),
**caractérisé en ce**
**que** là-dessus, une impulsion d'un deuxième type est émise par un autre convertisseur, en ce que l'impulsion du premier type se différencie de l'impulsion du deuxième type par une modulation de leurs ondes porteuses respectives et en ce que la réflexion de l'impulsion du premier type peut être différenciée de la réflexion de l'impulsion du deuxième type par l'unité centrale (23) à l'aide des modulations différentes.

2. Procédé selon la revendication 1, **caractérisé en ce que** les réflexions d'une impulsion sont à chaque fois détectées par le même convertisseur que celui qui a émis l'impulsion.

3. Procédé selon la revendication 2, **caractérisé en ce que** les réflexions sont en plus détectées par au moins un convertisseur voisin.

4. Procédé selon l'une des revendications 1 à 3, **caractérisé en ce que** la modulation est une modulation d'amplitude analogique ou numérique.

5. Procédé selon l'une des revendications 1 à 4, **caractérisé en ce que** la modulation est une modulation angulaire analogique ou numérique.

6. Procédé selon l'une des revendications 4 ou 5, **caractérisé en ce que** la modulation numérique s'effectue sous la forme d'un codage.

7. Procédé selon la revendication 6, **caractérisé en ce que** la modulation numérique emploie le codage de Hamming.

8. Procédé selon la revendication 5, **caractérisé en ce que** la modulation emploie le codage de Manchester.

9. Procédé selon l'une des revendications 1 à 8, **caractérisé en ce que** différentes impulsions peuvent en plus être différenciées en utilisant des ondes porteuses différentes.

10. Procédé selon l'une des revendications 1 à 9, **caractérisé en ce que** les ondes porteuses utilisées sont des ondes ultrasoniques.

11. Procédé selon l'une des revendications 1 à 10, **caractérisé en ce qu'**au moins trois, notamment plus de quatre convertisseurs à ultrasons sont utilisés en parallèle.

12. Dispositif pour détecter un environnement comprenant au moins deux convertisseurs à ultrasons (1, 2, 3, 4, 5, 20) pour émettre des impulsions, une unité centrale (23) dans laquelle différentes modulations sont associées à différents instants d'émission et/ou convertisseurs, un convertisseur à ultrasons pour détecter des réflexions et une unité d'interprétation (26) pour interpréter des temps de réflexion en tenant compte des différentes modulations et des convertisseurs et/ou instants d'émission qui leur sont associés, **caractérisé en ce que** sont prévus des moyens pour mettre en oeuvre un procédé selon l'une des revendications précédentes.
